# EUROPÄISCHE PATENTSCHRIFT

(11) **EP 1 246 303 B1**
(45) Veröffentlichungstag und Bekanntmachung des Hinweises auf die Patenterteilung: **29.12.2004**
(21) Anmeldenummer: 02013427.6
(22) Anmeldetag: 03.03.1997
(51) Int. Cl.: H01R 4/24

(54) **Anschlussmodul für die Telekommunikationstechnik**
Connection module for telecommunication technology
Module de raccordement pour la technique des télécommunications

(30) Priorität: 05.03.1996 DE 19608517
(43) Veröffentlichungstag der Anmeldung: 02.10.2002
(62) Teilanmeldung aus: 97103429.3
(73) Patentinhaber: QUANTE Aktiengesellschaft, 41453 Neuss (DE)
(72) Erfinder: Burmeister, Klaus-Dieter, Deceased (DE); Edelmann, Wolfgang, 42111 Wuppertal (DE); Gaertner, Norbert, 42285 Wuppertal (DE); Otto, Hans-Dieter, 51688 Wipperf-rth (DE); Weber, Helmut, 42113 Wuppertal (DE)
(74) Vertreter: HOFFMANN - EITLE

(56) Entgegenhaltungen:
- GB-A- 2 048 580
- US-A- 4 171 857
- US-A- 4 283 103
- US-A- 4 541 682
- US-A- 4 846 735
- US-A- 4 851 967
- US-A- 5 163 855
- US-A- 5 224 881
- US-A- 5 494 461

## Beschreibung

Die vorliegende Erfindung betrifft ein Anschlussmodul für die Telekommunikationstechnik nach dem Oberbegriff des Patentanspruchs 1. Derartige Anschlussmodule werden beispielsweise an der Übergabestelle unterschiedlicher Netzbetreiber von Telekommunikations- und Datenleitungen eingesetzt. Hierdurch ist es möglich, z.B. öffentliche Kabelnetze von denen privater Netzbetreiber bei auftretenden Übertragungsfehlern zu trennen und zu prüfen. Hierbei kann es wünschenswert sein, zum Schutz der Netze Überspannungsableiter und/oder Feinschutzstecker im Bereich des Anschlussmodules einzusetzen. Ebenso ist ein passiver Prüfabschluss für den Abschluss des öffentlichen Netzes einsetzbar. Für unterbrechungslose Umschaltungen können Umschaltadapter vorgesehen werden.

Ein Anschlussmodul ist aus der DE 33 11 459 C2 bekannt. Das bekannte Anschlussmodul weist Anschlusskontakte für Kabeladern sowie Kontakte für Überspannungsbauteile auf. Durch Zerlegen des Gehäuses und Austauschen der Erdungsschiene kann das bekannte Anschlussmodul derart umgerüstet werden, dass alternativ in eine jeweilige Ausnehmung ein 3-Poll-Überspannungsableiter oder zwei 2-Pol-Überspannungsableiter einsetzbar sind. Eine derartige Umrüstbarkeit, bei der das Gehäuse zerlegt werden muss, ist jedoch in der Praxis nachteilhaft.

Aus der US 4,851,967 ist ein Anschlussmodul nach dem Oberbegriff des Patentanspruchs 1 bekannt, das zwei gegenüberliegende Reihen von Schneidklemmkontakten aufweist, mit denen insgesamt fünf Doppeladern ankommend und abgehend kontaktiert werden können. Zwischen den einander gegenüberliegenden Schneidklemmkontakten einer Ader sind verschiedene Steckbuchsen vorgesehen, um Schutz- oder Prüfstecker einzustecken.

Das bekannte Anschlussmodul weist an seiner Unterseite Rasthaken auf, die dazu dienen, das Anschlussmodul auf eine Profilschiene aufzurasten. Auf dieser Profilschiene können mehrere Anschlussmodule in Reihe befestigt werden, wobei das jeweils äußerste Modul mit einer Schraube an der Profilschiene gesichert wird. Somit können zwar mehrere Module auf der Profilschiene nebeneinander befestigt werden, jedoch können mit diesem Anschlussmodul nur Doppeladeranschlüsse in einer Anzahl bereitgestellt werden, die dem Vielfachen von 5 entspricht. Sofern Anschlüsse mit lediglich zwei Doppeladern oder mit vier, sechs oder acht Doppeladern gewünscht werden, sind bei dem bekannten Anschlussmodul entweder zuviel oder zuwenig Anschlussmöglichkeiten vorhanden. Ein weiterer Nachteil besteht darin, dass sich das bekannte Anschlussmodul nur unter Zuhilfenahme einer Profilschiene anreihen lässt. Schließlich ist dieses bekannte Anschlussmodul auch hinsichtlich der Anbringbarkeit von Überspannungsgasableitern unflexibel gestaltet.

Der vorliegenden Erfindung liegt die Aufgabe zugrunde, ein Anschlussmodul zu schaffen, das flexibel mit Zusatzbauteilen versehen werden kann. Ferner kann das Anschlussmodul bei verringerten Fertigungskosten Einsatzmöglichkeiten aufweisen, die um ein Vielfaches erhöht sind, und leicht umgerüstet und in flexibler Weise mit Überspannungsgasableitern versehen werden.

Die Lösung dieser Aufgabe erfolgt durch ein Anschlussmodul mit den Merkmalen des Patentanspruchs 1. Weiterbildungen sind in den weiteren Ansprüchen beschrieben.

Das Anschlussmodul kann einen Schneidklemmkontakt aufweisen, dessen Schneidklemmschlitz so ausgebildet ist, dass auf den Schneidklemmkontakt auch bei bereits im Schneidklemmschlitz angeschalteter Ader von oben eine Kontaktfeder eines Prüfabschlusses oder dergleichen an den Schneidklemmkontakt aufgesteckt werden kann. Gleichzeitig ist das Gehäuse des Anschlussmodules so ausgebildet, dass dieses hinter dem genannten Schneidklemmkontakt einen Freiraum zur Aufnahme des Prüfabschlusses oder dergleichen aufweist. Hierdurch ergibt sich der große Vorteil, dass der Schneidklemmkontakt, der bislang ausschließlich zum Kontaktieren der ankommenden oder abgehenden Ader verwendet wurde, eine Doppelfunktion besitzt, um zusätzlich einen Prüfabschluss oder dergleichen, beispielsweise eine oder mehrere elektronische Baugruppen, zu kontaktieren. Diese zweifache Verwendung eines Schneidklemmkontaktes ist dabei nicht auf eine bestimmte Anwendung beschränkt. Da das Gehäuse des Anschlussmodules einen speziellen Freiraum für diesen Prüfabschluss aufweist, der hinter dem Schneidklemmkontakt angeordnet ist, bleibt der Prüfabschluss im Bereich des Anschlussmodulgehäuses geschützt und stört nicht das Einstecken weiterer Prüf- oder Trennstecker.

In einer bevorzugten Weiterbildung der Erfindung ist das Anschlussmodul so ausgebildet, dass der Prüfabschluss auch bei eingesetztem Überspannungsgasableiter in den Freiraum einsetzbar ist.

Gemäß der Erfindung ist im Gehäuse eine Öffnung vorgesehen, die den Zugang zu einer Trenn- oder Anschlussstelle ermöglicht, die sich zwischen zwei gegenüberliegenden Schneidklemmkontakten befindet. Hierbei ist die Öffnung vorzugsweise in einem Abstand zu dem Freiraum ausgebildet, so dass ein Trenn- oder Prüfstecker auch dann noch in die Trenn- oder Anschlussstelle eingesteckt werden kann, wenn sich in dem Freiraum bereits ein Prüfabschluss befindet. Somit besitzt diese Ausführungsform eine deutlich erhöhte Flexibilität.

Ferner wird bevorzugt, dass die Öffnung für die Trennstelle bei der entsprechenden Ausführungsform mit einer Kappe verschlossen ist, die nicht zerstörungsfrei geöffnet werden kann.

Bevorzugt aber in dieser Anmeldung nicht beansprucht ist in dem Gehäuse des Anschlussmodules eine Ausnehmung vorgesehen, die eine solche Größe besitzt, dass von oben entweder ein 3-Pol-Überspannungsgasableiter oder alternativ zwei 2-Pol-Überspannungsgasableiter je Doppelader einsetzbar sind. Durch diese äußerst vorteilhaften Merkmale, die im übrigen bei jedem beliebigen Anschlussmodul Verwendung finden können, ergibt sich der große Vorteil, dass ein und dasselbe Anschlussmodul für unterschiedliche Überspannungsgasableiter Verwendung finden kann. Auch ist hierdurch die Servicefreundlichkeit erhöht, da der Monteur oder Kundendienstmonteur wahlweise 2-Pol- oder 3-Pol-Überspannungsgasableiter einsetzen kann, wenn ihm beispielsweise nur eine dieser beiden Varianten zur Verfügung steht. Ferner ist ein Kontaktelement mittig in der zumindest einen Ausnehmung lösbar an einem Erdkontakt angeordnet. Das Kontaktelement stellt eine leitende Verbindung zu einem Erdkontakt her und ermöglicht für das erfindungsgemäße Anschlussmodul eine vereinfachte Herstellung und ein leichtes Umrüsten.

Nach einer vorteilhaften aber in dieser Ammeldung nicht beanspruchten Ausbildung der Erfindung kann in dem Gehäuse ein flächiges Kontaktelement mit zwei nebeneinanderliegenden, im wesentlichen U-förmigen Öffnungen befestigt sein, in die jeweils ein 3-Pol-Überspannungsgasableiter mit seinem (mittleren) Erdkontakt einsetzbar ist, um eine leitende Verbindung zwischen den beiden Erdkontakten der nebeneinanderliegenden Überspannungsableiter herzustellen. Dieses flächige Kontaktelement stellt dabei gleichzeitig eine leitende Verbindung zu einer Erdschiene oder einem Erdanschluss her. Alternativ kann ein flächiges Kontaktelement ohne Öffnungen vorgesehen sein, um dann insgesamt vier "kleeblattförmig" nebeneinanderliegende Überspannungsgasableiter zu kontaktieren.

In einer bevorzugten Weiterbildung wird ein Anschlussmodul geschaffen, das zum Kontaktieren von genau zwei Doppeladern dient. Hierdurch lässt sich durch Kombinieren mit weiteren gleichartigen Anschlussmodulen jede durch 2 teilbare Paarzahl erreichen. Gleichzeitig sind hierdurch die Fertigungskosten deutlich gesenkt, da das Anschlussmodul kleiner gebaut werden kann und keine überflüssigen Kontaktierungsmöglichkeiten vorhanden sind.

In dieser Ausführungsform schafft die Erfindung ein äußerst flexibles Anschlussmodul, das aufgrund seiner geringen Größe universell eingesetzt werden kann, wobei gleichzeitig die Herstellungskosten beachtlich gesenkt sind, da für beliebige Paarzahlen lediglich eine Ausführungsform eines Anschlussmodules hergestellt werden muss.

Nach einer weiteren vorteilhaften Ausbildung der Erfindung können an einem Anschlussmodul zwischen zwei Schneidklemmkontakten für eine Ader zwei Kontaktzungen vorgesehen sein, auf die jeweils eine Kontaktfeder zur Kontaktierung eines Überspannungsgasableiters aufsteckbar ist. Hierdurch lassen sich die Überspannungsgasableiter auf einfache Weise mit nur wenigen Bauteilen kontaktieren, wobei die Kontaktfedern beim Aufstecken mit dem Anschlusskontakt verklemmt werden, so dass die Überspannungsgasableiter auch ausgetauscht werden können, ohne dass sich die Kontaktfedern lösen. Hier kann es vorteilhaft sein, die Kontaktfedern mit einem Vorsprung zu versehen, der gegenüber einem Gehäusevorsprung verriegelt, um ein Herausziehen der Kontaktfedern beim Entfernen des Überspannungsgasableiters zu verhindern.

Bevorzugt ist an der Gehäuseunterseite eine Rastaufnahme für eine Erdkontaktfeder vorgesehen.

Nach einer weiteren vorteilhaften Ausführungsform besitzt jeder Anschlusskontakt zwei Schneidklemmkontakte für jede Einzelader (ankommend bzw. abgehend), die auf einer Geraden angeordnet sind, die parallel zu den beiden Außenwänden verläuft. Durch dieses Merkmal, das grundsätzlich aus der eingangs genannten US 4,851,967 bereits bekannt ist, ergibt sich der Vorteil, dass der Monteur sofort erkennt, welche gegenüberliegenden Schneidklemmkontakte einander zugeordnet sind. Demgegenüber besitzen andere bekannte Anschlussmodule eine versetzte Anordnung der Schneidklemmkontakte, welche die Zuordnung erschweren.

Besonders vorteilhaft ist es ferner, wenn der Abstand zwischen den beiden Schneidklemmkontakten einer Doppelader (a, b) und der Abstand zwischen zwei benachbarten Schneidklemmkontakten zweier Doppeladern (a1, b1) eines Moduls unterschiedlich groß ist. Durch diese ebenfalls grundsätzlich aus der obengenannten US-Patentschrift bekannte Ausführungsform ist die Montagefreundlichkeit ebenfalls erhöht, da die Doppeladern optisch deutlich voneinander getrennt sind und somit vom Monteur die Zugehörigkeiten schnell erkannt werden können.

Um die Einsatzmöglichkeiten und die Flexibilität des Anschlussmodules weiter zu erhöhen, können nach einer weiteren Ausbildung der Erfindung an der Unterseite des Gehäuses zusätzlich Rastmöglichkeiten vorgesehen sein, die eine Befestigung des Anschlussmodules an einer Bodenplatte ermöglichen. Dies können entweder angeformte Rastnasen sein, die in Aussparungen einer ebenen Bodenplatte einrasten, oder auch Vorsprünge, in die entsprechende Rastnasen eingreifen können.

Ferner wird bevorzugt, dass das Gehäuse an zwei gegenüberliegenden Außenwänden eine Verbindungseinrichtung aufweist, die ein Ankoppeln eines weiteren Anschlussmodules auch ohne Profilschiene ermöglicht. Dadurch, dass das Gehäuse eine weitere Verbindungseinrichtung aufweist, die ein Ankoppeln der Anschlussmodule auch ohne Profilschiene ermöglicht, ist einerseits für eine schnelle und einfache Anreihbarkeit gesorgt, andererseits lässt sich das erfindungsgemäße Anschlussmodul wesentlich flexibler einsetzen, da die aneinander angereihten Anschlussmodule mit Hilfe eines Endstückes als Block auf einfache Weise an jeder gewünschten Stelle befestigt werden können, ohne dass eine Profilschiene vorgesehen sein muss.

In vorteilhafter Weise kann die Verbindungseinrichtung eine sich verjüngende Nut und ein darin eingreifendes Koppelelement aufweisen. Hierdurch lassen sich die erfindungsgemäßen Anschlussmodule auf einfache Weise dadurch miteinander koppeln, dass das Koppelelement in die sich verjüngende Nut, z.B. eine Schwalbenschwanznut oder dergleichen, eingesetzt wird. Hierbei kann das Koppelelement ein zu der Nut komplementärer Vorsprung sein, der an einer Seite des Anschlussmodules an das Gehäuse angeformt ist. Vorzugsweise ist jedoch das Koppelelement ein separater und profilierter Verbindungssteg, der in die Nuten zweier benachbarter Module koppelnd einsetzbar ist. Hierdurch lassen sich die einzelnen Anschlussmodule auf einfache Weise dadurch miteinander koppeln, dass der profilierte Verbindungssteg in die Nuten zweier benachbarter Module eingeschoben wird.

Nach einer weiteren Ausbildung der Erfindung können in dem Gehäuse des Anschlussmoduls Kontaktierungsmöglichkeiten für eine Schirm- und/oder Erdkontaktierung eines Telekommunikationskabels vorgesehen sein.

Nach einer besonders vorteilhaften Ausführungsform sind in dem Gehäuse derart beabstandete Öffnungen vorgesehen, dass für eine Ader in das Anschlussmodul gleichzeitig von oben verschiedene Elemente eingesteckt werden können. Insbesondere können ein Trenn-, Prüf- oder Feinschutzstecker in eine Trennstelle, ein Überspannungsgasableiter in die Ausnehmung und ein Prüfabschluss in den gegenüberliegenden Schneidklemmkontakt eingesetzt werden, wobei das Modul mit den aufgesteckten Bauteilen mit Hilfe eines Anlegewerkzeuges beschaltbar bleibt. Hierdurch zeigt sich, dass ein solches Anschlussmodul aufgrund seines Aufbaus und der beabstandet vorgesehenen Öffnungen sämtliche wünschenswerten Kontaktierungsmöglichkeiten gleichzeitig gewährleistet.

Der in dem Gehäuse vorgesehene Anschlusskontakt, der zur ankommenden und abgehenden Kontaktierung jeweils einer Ader dient, kann vorteilhafterweise einstückig ausgebildet sein und in der genannten Reihenfolge folgende Kontaktierungen aufweisen: einen Schneidklemmkontakt, eine Kontaktstelle mit zwei Kontaktbügeln, zwei Kontakte für Überspannungsgasableiter und einen weiteren Schneidklemmkontakt. Durch die einstückige Ausbildung eines solchen Anschlusskontaktes lassen sich die Herstellungskosten erheblich senken, wobei der Anschlusskontakt gleichzeitig für sämtliche Test-, Prüf- oder Montagezwecke geeignet ist.

Sofern der Anschlusskontakt im Bereich der Kontaktschenkel einen abtrennbaren Verbindungsstreifen aufweist, lässt sich der Anschlusskontakt durch Abtrennen dieses Verbindungsstreifens auf einfache Weise zu einem Trennkontakt ausbilden.

Nach einer weiteren vorteilhaften Ausbildung der Erfindung besteht eine Vorrichtung aus mindestens zwei erfindungsgemäßen Anschlussmodulen und weist einen im wesentlichen U-förmigen Verbindungsbügel auf, der von oben auf die Erdkontakte zweier benachbarter Module aufsteckbar ist. Hierdurch lassen sich aneinander angereihte Anschlussmodule über deren Erdkontakte auch dann auf einfache Weise von oben miteinander elektrisch verbinden, wenn keine leitende Profilschiene vorgesehen ist und wenn die Anschlussmodule bereits aneinander angereiht sind.

Für eine Vorrichtung bestehend aus mindestens zwei nebeneinander angeordneten Anschlussmodulen wird bevorzugt, dass diese mit ihren jeweiligen Außenwänden ohne Abstand aneinander anliegen.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: eine Aufsicht auf ein Anschlussmodul gemäß der Erfindung, wobei ein 3-Pol-Überspannungsgasableiter in das Anschlussmodul eingesetzt ist und die Anschlusskontakte nicht dargestellt sind;
- Fig. 2: eine Querschnittsansicht durch das Anschlussmodul von Fig. 1 entlang der Linie II-II, wobei zusätzlich eine kontaktierte Ader und ein Trennstecker dargestellt sind;
- Fig. 3: eine Querschnittsansicht durch das Anschlussmodul von Fig. 1 entlang der Linie III-III, jedoch ohne eingesetzten Überspannungsgasableiter;
- Fig. 4A: einen zum Trennkontakt umgewandelten Anschlusskontakt;
- Fig. 4B: einen Anschlusskontakt; und
- Fig. 5: eine Seitenansicht des Anschlussmoduls von Fig. 1 aus der Richtung V, in das von oben ein passiver Prüfabschluss, ein Feinschutzstecker sowie ein Anlegewerkzeug eingeführt sind.

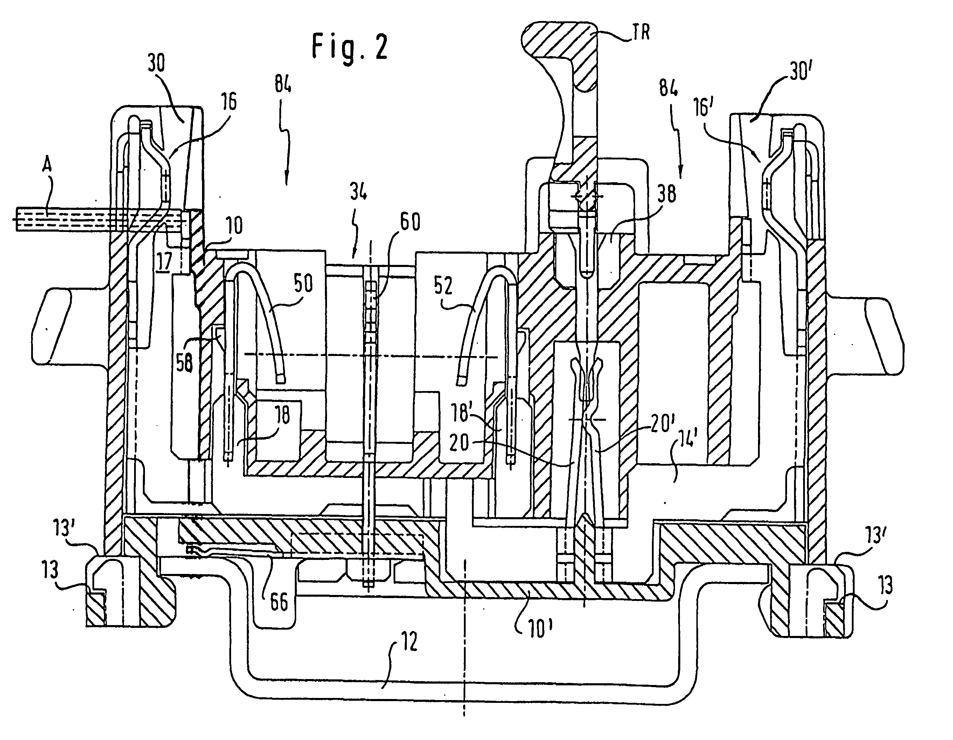

Das Anschlussmodul gemäß der Erfindung weist ein Gehäuse auf, das zweiteilig ausgebildet ist und ein Oberteil 10 sowie ein Unterteil 10' umfasst, die durch Rastverbindungen miteinander verriegelt sind. An seiner Unterseite weist das Gehäuseunterteil 10' eine Rastmöglichkeit auf, um das Gehäuse auf eine Profilschiene 12 aufzurasten (vgl. Fig. 2).

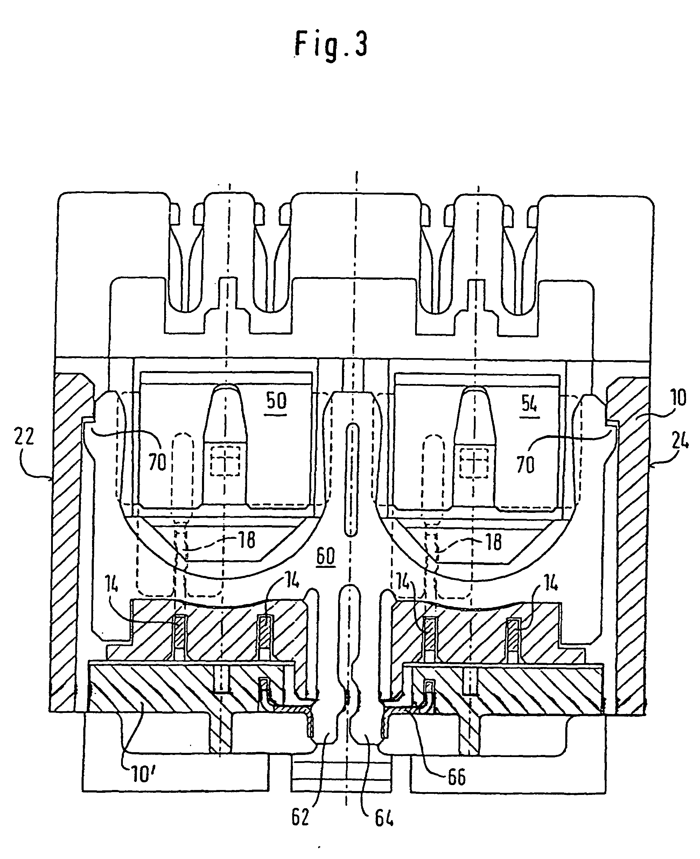

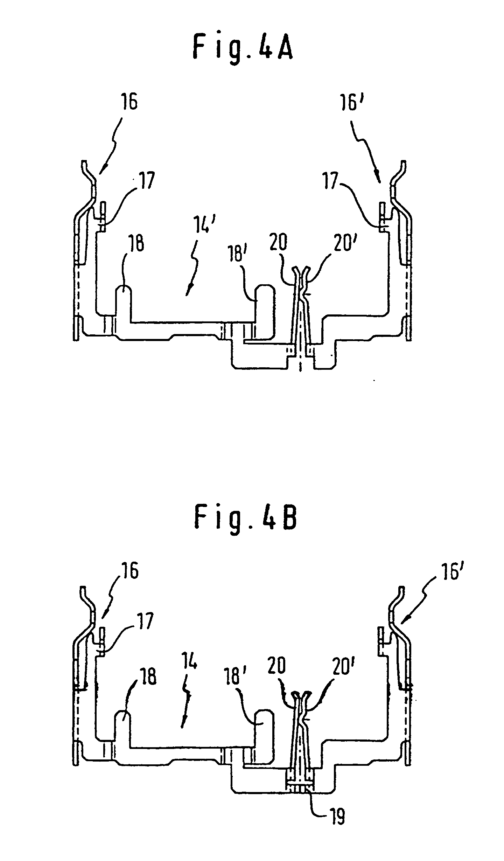

Wie die Figuren zeigen, sind in dem Gehäuse insgesamt vier Anschlusskontakte 14' (vgl. Fig. 3 und 4A) vorgesehen, die insgesamt zwei Doppeladern kontaktieren können. Fig. 4B zeigt den Aufbau eines ähnlichen, jedoch einstückig ausgebildeten Anschlusskontaktes 14, der an seinen beiden Enden jeweils einen Schneidklemmkontakt 16 und 16' aufweist. Zwischen diesen Schneidklemmkontakten 16 und 16' sind einerseits zwei Kontaktzungen 18 und 18' sowie Kontaktbügel 20 und 20' einer Kontaktstelle vorgesehen. Die beiden Kontaktschenkel werden dabei durch einen Verbindungsstreifen oder eine Verbindungsschlaufe 19 überbrückt.

In Fig. 4A ist der Anschlusskontakt 14' dargestellt, der im wesentlichen dem Anschlusskontakt 14 von Fig. 4B entspricht. Die Kontaktstelle, die durch die Kontaktbügel 20, 20' des Anschlusskontaktes 14' gebildet wird, ist jedoch keine Anschluss- bzw. Abgreifstelle sondern eine Trennstelle, da der bei dem Anschlusskontakt 14 vorhandene Verbindungsstreifen 19 bei dem Anschlusskontakt 14' entfernt ist. Dadurch wird durch Trennen der Kontaktbügel 20, 20' ein Auftrennen der Verbindung zwischen den Schneidklemmkontakten 16 und 16' eines Anschlusskontaktes 14' ermöglicht.

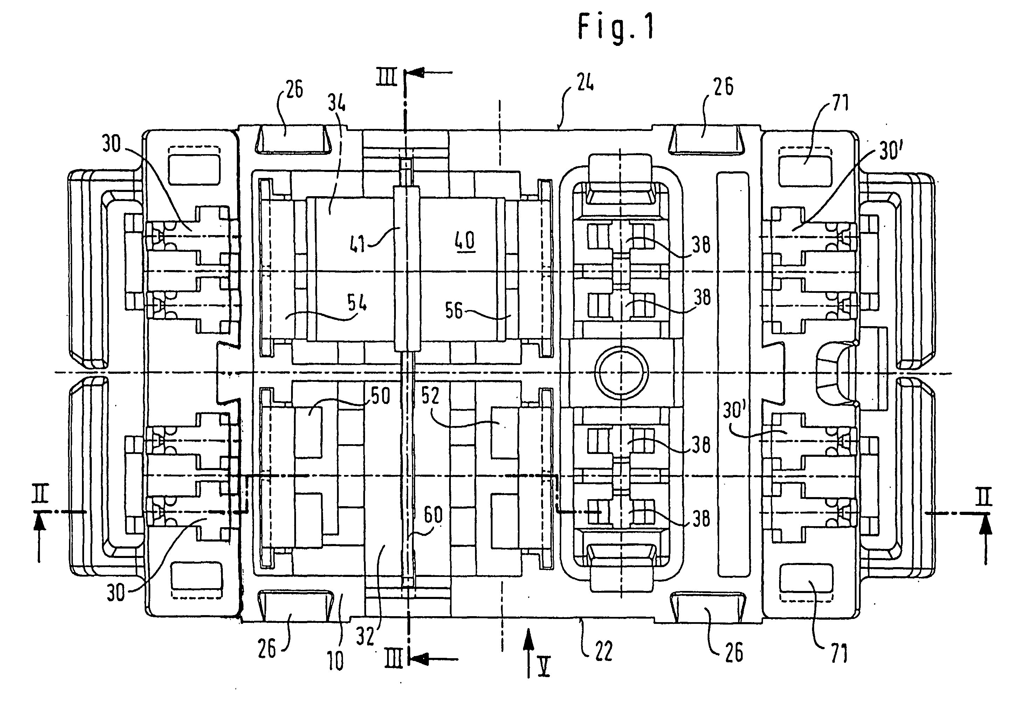

Wie die Fig. 1 und 2 zeigen, ist jeder Anschlusskontakt 14 so ausgebildet, dass seine entgegengesetzt gegenüberliegenden Schneidklemmkontakte 16 und 16', die zur ankommenden und abgehenden Kontaktierung jeweils einer Einzelader dienen, auf einer Geraden angeordnet sind, die parallel zu den Außenwänden 22, 24 des Gehäuses 10 verläuft. Die Anschlusskontakte 14 sind dabei so in dem Gehäuse angeordnet, dass jeweils zwei Anschlusskontakte 14 einen geringeren gegenseitigen Abstand aufweisen und jeweils ein Anschlusskontaktpaar einen demgegenüber größeren Abstand aufweist.

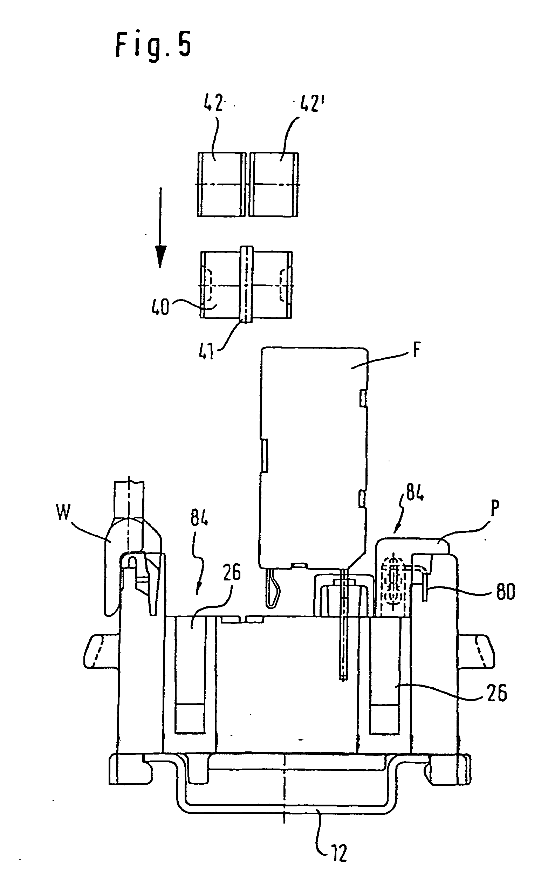

Wie insbesondere die Fig. 1 und 2 zeigen, weist das Gehäuse mehrere Öffnungen auf, die sich von oben in das Gehäuseinnere öffnen. Durch die Öffnungen 30 und 30' lässt sich jeweils eine ankommende bzw. abgehende Einzelader A (vgl. Fig. 2) in einen zugehörigen Schneidklemmkontakt 16 bzw. 16' einlegen und mit Hilfe eines Anlegewerkzeuges W (Fig. 5) kontaktieren, dessen Werkzeugkopf durch diese Öffnungen 30, 30' eingeführt wird.

Weitere Gehäuseöffnungen 32, 34 dienen dazu, Überspannungsgasableiter in das Innere des Gehäuses einzusetzen. Fig. 1 zeigt einen 3-Pol-Überspannungsgasableiter 40, der in die Gehäuseöffnung 34 eingesetzt ist. Die Gehäuseöffnungen bzw. die darunter befindlichen Ausnehmungen 32 und 34 weisen eine solche Größe auf, dass von oben entweder der beschriebene 3-Pol-Überspannungsgasableiter 40 oder alternativ zwei 2-Pol-Überspannungsgasableiter 42 und 42' (Fig. 5) in das Gehäuse eingesetzt werden können.

In Fig. 1 rechts von den Öffnungen 32 und 34 befinden sich weitere Gehäuseöffnungen 38, die ein Einstecken eines Trennsteckers TR (Fig. 2), eines Prüfsteckers oder eines Feinschutzsteckers F (Fig. 5) ermöglichen. Diese Stecker können die Kontaktstelle trennen, die durch die Kontaktbügel 20, 20' gebildet wird. In Fig. 2 ist die Ausführungsform dargestellt, bei der ein Trennstecker TR in die Kontaktstelle eingesteckt ist.

Fig. 2 zeigt, wie der Anschlusskontakt 14' (mit Trennstelle) in das Gehäuse 10, 10' eingesetzt ist. Hierbei dienen verschiedene Gehäusevorsprünge und -vertiefungen dazu, den Anschlusskontakt 14' sicher in dem Gehäuse zu halten. Zur Kontaktierung der Überspannungsgasableiter 40, 42, 42', welche in die Öffnungen 32, 34 eingesetzt werden können, dienen insgesamt vier Kontaktfedern 50, 52, 54 und 56, die mit jeweils einem der nebeneinanderliegenden Anschlusskontakte verbunden sind. Wie Fig. 2 zeigt, ist die Kontaktfeder 50 in die Zunge 18 des in Fig. 1 am weitesten unten liegenden Anschlusskontaktes 14' federnd und geklemmt eingesteckt, wohingegen die Kontaktfeder 52 in die Zunge 18' des in Fig. 1 darüber liegenden Anschlusskontaktes eingesteckt ist. Wie Fig. 2 ferner zeigt, sind die Kontaktfedern mit Widerhaken 58 versehen, die eine Gehäusekante anschlagen, um ein versehentliches Herausziehen der Kontaktfedern beim Entfernen eines Überspannungsgasableiters zu verhindern.

Zur Kontaktierung des Erdkontaktes 41 (Fig. 1 und 5) eines 3-Pol-Überspannungsgasableiters 40 ist ein flächiges Kontaktelement 60 vorgesehen, das am besten in Fig. 3 zu erkennen ist. Das flächige Kontaktelement 60 weist zwei nebeneinanderliegende, im wesentlichen U-förmige Öffnungen auf, in die jeweils ein Erdkontakt 41 (Fig. 5) eines 3-Pol-Überspannungsgasableiters 40 einsetzbar ist. Hierbei verjüngen sich die Schenkel des "U" ein wenig, so dass diese federnd an dem jeweiligen Erdkontakt 41 anliegen. Nach Einsetzen zweier Überspannungsableiter 40 in die Öffnungen 32 und 34 (Fig. 1) berühren die beiden äußeren Kontakte des Überspannungsableiters jeweils die äußeren Kontaktfedern 50, 52 bzw. 54, 56. Der mittlere Erdkontakt 41 ist dabei in den Öffnungen des Kontaktelementes 60 aufgenommen, so dass eine elektrisch leitende Verbindung zwischen diesen Erdkontakten 41 und einem Erdanschluss hergestellt ist. Somit ist jede an einem Schneidklemmkontakt 16, 16' kontaktierte Ader über eine Überspannungsgasableiterkammer mit der Erde verbunden.

Wie Fig. 3 zeigt, ist das Kontaktelement 60 an seiner Unterseite mit zwei mittigen Federschenkeln 62, 64 versehen, die wiederum gegen einen Erdkontakt 66 federnd andrücken, der an der Gehäuseunterseite in einer Rastaufnahme gehalten ist. Wie Fig. 2 zeigt, stellt der Erdkontakt 66 eine elektrisch leitende Verbindung zwischen dem Federkontakt 60 und der Profilschiene 12 dar, die geerdet ist.

Sofern die Anschlussmodule nicht auf einer Profilschiene oder einer geerdeten Schiene befestigt werden, ist ein (nicht dargestellter) im wesentlichen U-förmiger Verbindungsbügel vorgesehen, der mit jeweils einem Schenkel von oben auf zwei Kontaktelemente 60 von nebeneinanderliegenden Anschlussmodulen aufsteckbar ist. Hierdurch werden diese Kontaktfedern elektrisch miteinander verbunden, und es kann eine weitere Verbindung zu einem Erdkontakt hergestellt werden.

Sofern in eine der Öffnungen 32, 34 nicht ein 3-Pol-Überspannungsableiter sondern zwei 2-Pol-Überspannungsableiter 42, 42' (Fig. 5) eingesetzt werden, wird anstelle des Kontaktelementes 60 alternativ ein ähnlich ausgestaltetes Kontaktelement (nicht dargestellt) verwendet, das keine U-förmigen Öffnungen aufweist, sondern dort durchgehend ausgebildet ist. Hierdurch können insgesamt vier 2-Pol-Überspannungsgasableiter 42, 42' mit ihren Kontaktflächen an diesem Kontaktelement anliegen. Dieses Kontaktelement kann in gleicher Weise mit Widerhaken 70 (Fig. 3) versehen sein, wie es das Kontaktelement 60 ist, um gegen eine Gehäusekante anzuschlagen und ein Herauslösen zu verhindern.

Um mehrere Anschlussmodule auch dann miteinander verbinden zu können, wenn keine Profilschiene oder keine Möglichkeiten vorgesehen sind, um das Anschlussmodul auf eine Grundplatte oder dergleichen aufzurasten, weist das erfindungsgemäße Anschlussmodul an seinen beiden gegenüberliegenden Außenwänden 22 und 24 jeweils zwei sich verjüngende Nuten 26 auf, die im Querschnitt schwalbenschwanzförmig ausgebildet sind. Zur Verbindung zweier nebeneinander angeordneter Anschlussmodule ist ein separater und komplementär profilierter Verbindungssteg (nicht dargestellt) vorgesehen, der im Querschnitt eine doppelte Schwalbenschwanzform besitzt und der in die Nuten 26 zweier nebeneinanderliegender Anschlussmodule verbindend eingeschoben werden kann. Hierauf sind zwei benachbarte Anschlussmodule fest miteinander gekoppelt und liegen mit ihren jeweiligen Außenwänden 22, 24 ohne Abstand aneinander an.

An den beiden verbleibenden Außenwänden des Anschlussmodules sind jeweils zwei L-förmige Drahtführungshaken angeformt. Ferner sind Aufrastmöglichkeiten 71 (Fig. 1) für Bezeichnungsstreifenhalter vorgesehen.

Am Gehäuseunterteil 10' sind zusätzlich verschiedene Rastmöglichkeiten 13, 13' (Fig. 2) vorgesehen, um eine Befestigung an einer Bodenplatte oder dergleichen mittels angedeuteter Rastnasen zu ermöglichen.

Die in den Figuren dargestellten Schneidklemmkontakte dienen einer Doppelfunktion. Einerseits werden die Schneidklemmkontakte zum Anschalten der jeweiligen Adern verwendet. Andererseits dienen diese jedoch als weitere Kontaktierungsmöglichkeit für die Kontaktfeder 80 eines Prüfabschlusses P, die durch die Öffnung 30 auf den Schneidklemmkontakt aufgesteckt werden kann (vgl. Fig. 5). Zur Aufnahme des Prüfabschlusses P weist das Gehäuse 10, 10' hinter jedem Schneidklemmkontakt 16 einen Freiraum 84 auf. Gleichzeitig ist der Freiraum 84 in einem solchen Abstand zu der Öffnung 38 für den Trennstecker angeordnet, dass gleichzeitig Prüfabschluss P und Trennstecker TR (Fig. 2) oder ein Feinschutzstecker F (Fig. 5) eingesteckt werden können.

Die Öffnungen 38 für die Trennstelle können mit zwei Kappen (nicht dargestellt) verschlossen werden, die nicht zerstörungsfrei geöffnet werden können. Hierdurch lassen sich unerlaubte Manipulationen an den Trennstellen erkennen.

## Patentansprüche

1. Anschlussmodul für die Telekommunikationstechnik, mit einem Gehäuse (10, 10'), und zumindest einem Schneidklemmkontakt (16, 16'), an dem von vorne eine Ader (A) anschließbar ist, wobei hinter dem Schneidklemmkontakt (16, 16') ein Freiraum (84) ausgebildet ist, in dem ein Prüfabschluss (P) oder dergleichen aufnehmbar ist, der mit dem Schneidklemmkontakt (16, 16') kontaktierbar ist, und wobei im Gehäuse eine Öffnung (38) für den Zugang zu einer Trenn- oder Anschlussstelle vorgesehen ist, die sich zwischen zwei gegenüberliegenden Schneidklemmkontakten (16, 16') befindet, wobei die Öffnung (38) vorzugsweise in einem Abstand zu dem Freiraum (84) ausgebildet ist, und in diese ein Trennstecker (TR) oder ein Feinschutzstecker (F) eingesteckt werden kann,
**dadurch gekennzeichnet, dass**
in dem Gehäuse ferner eine Ausnehmung (32, 34) vorgesehen ist, in die zumindest ein Überspannungsgasableiter (40, 42, 42') einsetzbar ist.

2. Anschlussmodul nach Anspruch 1, **dadurch gekennzeichnet, dass** das Gehäuse (10, 10') und der Schneidklemmkontakt (16, 16') hinsichtlich des Freiraums (84) derart ausgebildet sind, dass der Prüfabschluss (P) oder dergleichen auch bei geklemmter Ader (A) aufsteckbar ist.

3. Anschlussmodul nach Anspruch 1 oder 2, **dadurch gekennzeichnet, dass** der Prüfabschluss (P) oder dergleichen auch bei eingesetztem Überspannungsgasableiter in den Freiraum (84) einsetzbar ist.

4. Anschlussmodul nach zumindest einem der vorangehenden Ansprüche, **dadurch gekennzeichnet, dass** die Öffnung (38) für die Trennstelle mit einer Kappe verschlossen ist, die nicht zerstörungsfrei geöffnet werden kann.

5. Anschlussmodul nach zumindest einem der vorangehenden Ansprüche, dass in dem Gehäuse (10, 10') Anschlusskontakte (14, 14') zum Kontaktieren von insgesamt zwei Doppeladern angeordnet sind.

6. Anschlussmodul nach zumindest einem der vorangehenden Ansprüche, **dadurch gekennzeichnet, dass** an einem Anschlusskontakt (14, 14') zwischen zwei Schneidklemmkontakten (16, 16') für eine Ader (A) zwei Kontaktzungen (18, 18') vorgesehen sind, auf die jeweils eine Kontaktfeder (50, 52, 54, 56) zur Kontaktierung eines Überspannungsgasableiters aufsteckbar ist.

7. Anschlussmodul nach zumindest einem der vorangehenden Ansprüche, **dadurch gekennzeichnet, dass** an der Gehäuseunterseite eine Rastaufnahme für eine Erdkontaktfeder (66) vorgesehen ist.

8. Anschlussmodul nach zumindest einem der vorangehenden Ansprüche, **dadurch gekennzeichnet, dass** der Anschlusskontakt (14, 14') zwei Schneidklemmkontakte (16, 16') für jede Einzelader (A) aufweist, die auf einer Geraden angeordnet sind, die parallel zu den beiden Außenwänden (22, 24) verläuft.

9. Anschlussmodul nach zumindest einem der vorangehenden Ansprüche, **dadurch gekennzeichnet, dass** der Abstand zwischen zwei Schneidklemmkontakten einer Doppelader und der Abstand zwischen zwei benachbarten Schneidklemmkontakten zweier Doppeladern eines Moduls unterschiedlich groß ist.

10. Anschlussmodul nach zumindest einem der vorangehenden Ansprüche, **dadurch gekennzeichnet, dass** das Gehäuse (10, 10') an seiner Unterseite eine Rastmöglichkeit (13, 13') für die Befestigung an einer Bodenplatte mittels Rastnasen aufweist.

11. Anschlussmodul nach zumindest einem der vorangehenden Ansprüche, **dadurch gekennzeichnet, dass** das Gehäuse an seiner Unterseite eine Rastmöglichkeit zum Aufrasten auf eine Profilschiene (12) aufweist, und dass das Gehäuse (10, 10') an zwei gegenüberliegenden Außenwänden (22, 24) eine Verbindungseinrichtung (26, 28) aufweist, die ein Ankoppeln eines weiteren Anschlussmodules auch ohne Profilschiene (12) ermöglicht.

12. Anschlussmodul nach Anspruch 11, **dadurch gekennzeichnet, dass** die Verbindungseinrichtung eine sich verjüngende Nut (26) und ein darin eingreifendes Koppelelement (28) aufweist.

13. Anschlussmodul nach Anspruch 12, **dadurch gekennzeichnet, dass** das Koppelelement ein an ein Anschlussmodul angeformter, komplementärer Vorsprung ist, oder vorzugsweise ein separater und profilierter Verbindungssteg (28), der in die Nuten (26) zweier benachbarter Module koppelnd einsetzbar ist.

14. Anschlussmodul nach zumindest einem der vorangehenden Ansprüche, **dadurch gekennzeichnet, dass** in dem Gehäuse (10, 10') eine Kontaktierungsmöglichkeit für eine Schirm- und Erdkontaktierung eines Telekommunikationskabels vorgesehen ist.

15. Anschlussmodul nach zumindest einem der vorangehenden Ansprüche, **dadurch gekennzeichnet, dass** in dem Gehäuse (10, 10') derart beabstandete Öffnungen (30', 38, 32, 34, 30) vorgesehen sind, dass für eine Ader in das Anschlussmodul gleichzeitig von oben ein Trenn- (TR), Prüf-, oder Feinschutzstecker (F) in eine Trennstelle, ein Überspannungsgasableiter (40, 42, 42') in die Ausnehmung und ein Prüfabschluss (P) in den gegenüberliegenden Schneidklemmkontakt (16) einsetzbar sind, und wobei gleichzeitig ein Schneidklemmkontakt (16') beschaltbar ist.

16. Anschlussmodul nach zumindest einem der vorangehenden Ansprüche, **dadurch gekennzeichnet, dass** in dem Gehäuse (10, 10') ein einstückiger Anschlusskontakt (14) für jeweils eine Ader (A) vorgesehen ist, der in der genannten Reihenfolge die folgenden Kontaktierungen ausgebildet hat: einen Schneidklemmkontakt (16'), eine Kontaktstelle mit zwei Kontaktbügeln (20, 20'), zwei Kontakte (18', 18) für Überspannungsgasableiter (40, 42, 42') und einen weiteren Schneidklemmkontakt (16).

17. Anschlussmodul nach Anspruch 16, **dadurch gekennzeichnet, dass** der Anschlusskontakt (14) im Bereich der Kontaktschenkel (20, 20') einen abtrennbaren Verbindungsstreifen (19) aufweist, um die Kontaktstelle zu einem Trennkontakt auszubilden.

18. Vorrichtung mit mindestens zwei nebeneinander angeordneten Anschlussmodulen nach zumindest einem der vorstehenden Ansprüche, **dadurch gekennzeichnet, dass** diese einen im wesentlichen U-förmigen Verbindungsbügel aufweist, der von oben auf die Kontaktelemente (60) zweier benachbarter Anschlussmodule aufsteckbar ist.

19. Vorrichtung mit mindestens zwei nebeneinander angeordneten Anschlussmodulen nach einem der vorstehenden Ansprüche, **dadurch gekennzeichnet, dass** diese mit ihren jeweiligen Außenwänden (22, 24) ohne Abstand aneinander anliegen.

## Claims

1. Connection module for telecommunications technology, with a housing (10, 10') and at least one insulation displacement contact (16, 16'), to which a wire (A) can be connected from the front, a free space (84) being formed behind the insulation displacement contact (16, 16'), in which a test closure (P) or the like can be received, which can be contacted by the insulation displacement contact (16, 16') and an opening (38) in the housing for access to a separation or connection point being provided which is situated between to oppositely situated insulation displacement contacts (16, 16'), the opening (38) being formed preferably at a spacing from the free space (84) and a separation plug (TR) or a fine protection plug (F) being able to be plugged into said opening,
***characterised in that***
a recess (32, 34) is provided furthermore in the housing, into which recess at least one surge voltage gas arrester (40, 42, 42') can be inserted.

2. Connection module according to claim 1, **characterised in that** the housing (10, 10') and the insulation displacement contact (16, 16') are configured with respect to the free space (84) such that the test closure (P) or the like can be plugged-in even in the case of a cramped wire (A).

3. Connection module according to claim 1 or 2, **characterised in that** the test closure (P) or the like can be inserted into the free space (84) even when a surge voltage gas arrester is inserted.

4. Connection module according to at least one of the preceding claims, **characterised in that** the opening (38) for the separation point is closed with a cap which cannot be opened non-destructively.

5. Connection module according to at least one of the preceding claims, in that connection contacts (14, 14') are disposed in the housing (10, 10') in order to contact two twin wires in total.

6. Connection module according to at least one of the preceding claims, **characterised in that** two contact studs (18, 18') are provided on one connection contact (14, 14') between two insulation displacement contacts (16, 16') for one wire (A), on which contact studs one contact spring (50, 52, 54, 56) respectively can be plugged-in for contacting a surge voltage gas arrester.

7. Connection module according to at least one of the preceding claims, **characterised in that** a catching receiving means for an earth contact spring (66) is provided on the housing underside.

8. Connection module according to at least one of the preceding claims, **characterised in that** the connection contact (14, 14') has two insulation displacement contacts (16, 16') for each individual wire (A), which contacts are disposed on a straight line which extends parallel to the two exterior walls (22, 24).

9. Connection module according to at least one of the preceding claims, **characterised in that** the spacing between two insulation displacement contacts of a twin wire and the spacing between two adjacent insulation displacement contacts of two twin wires of a module is of a different size.

10. Connection module according to at least one of the preceding claims, **characterised in that** the housing (10, 10') has a catching possibility (13, 13') on its underside for securing to a base plate by means of catching projections.

11. Connection module according to at least one of the preceding claims, **characterised in that** the housing has a catching possibility on its underside for catching onto a profile rail (12), and **in that** the housing (10, 10') has a connection device (26, 28) on two oppositely situated exterior walls (22, 24), which device makes possible coupling of a further connection module even without a profile rail (12).

12. Connection module according to claim 11, **characterised in that** the connection device has a tapering groove (26) and a coupling element (28) which engages therein.

13. Connection module according to claim 12, **characterised in that** the coupling element is a complementary projection which is moulded onto a connection module, or preferably is a separate and profiled connection web (28) which can be inserted into the grooves (26) of two adjacent modules so as to form a coupling.

14. Connection module according to at least one of the preceding claims, **characterised in that** a contacting possibility for a shielding- and earth contacting of a telecommunications cable is provided in the housing (10, 10').

15. Connection module according to at least one of the preceding claims, **characterised in that** openings (30', 38, 32, 34, 30) are provided in the housing (10, 10') which are spaced such that, for one wire, there can be inserted simultaneously from above into the connection module a separation- (TR), test- or fine protection plug (F) into a separation point, a surge voltage gas arrester (40, 42, 42') into the recess and a test closure (P) into the oppositely situated insulation displacement contact (16) and an insulation displacement contact (16') being able to be wired at the same time.

16. Connection module according to at least one of the preceding claims, **characterised in that** a one-piece connection contact (14) is provided in the housing (10, 10') for respectively one wire (A), which contact has formed the following contactings in the mentioned sequence: an insulation displacement contact (16'), a contact point with two sliding bows (20, 20'), two contacts (18, 18') for surge voltage gas arresters (40, 42, 42') and a further insulation displacement contact (16).

17. Connection module according to claim 16, **characterised in that** the connection contact (14) has a separable connection strip (19) in the region of the contact legs (20, 20') in order to form the contact point to a separation contact.

18. Device with at least two adjacently disposed connection modules according to at least one of the preceding claims, **characterised in that** said device has a substantially U-shaped union bow, which can be plugged-in from above onto the contact elements (60) of two adjacent connection modules.

19. Device with at least two adjacently disposed connection modules according to one of the preceding claims, **characterised in that** these abut on each other by their respective exterior walls (22, 24) with no spacing.

## Revendications

1. Module de raccordement pour la technique des télécommunications, avec un boîtier (10, 10') et au moins un contact à borne guillotine (16, 16') auquel un conducteur (A) peut être raccordé de l'avant, dans lequel, derrière le contact à borne guillotine (16, 16'), est formé un espace libre (84) pouvant recevoir une prise de test (P) ou similaire qui peut être mise en contact avec le contact à borne guillotine (16, 16'), et dans lequel il est prévu dans le boîtier une ouverture (38) permettant d'accéder à un point de coupure ou de raccordement qui se trouve entre deux contacts à borne guillotine (16, 16') situés l'un en face de l'autre, l'ouverture (38) étant de préférence réalisée à une certaine distance de l'espace libre (84) et une fiche de coupure (TR) ou une fiche de protection fine (F) pouvant être enfichée dans cette ouverture,
**caractérisé en ce qu'**il est prévu en plus dans le boîtier un évidement (32, 34) dans lequel peut se loger au moins un parafoudre à gaz (40, 42, 42').

2. Module de raccordement selon la revendication 1, **caractérisé en ce que** le boîtier (10, 10') et le contact à borne guillotine (16, 16') sont réalisés en ce qui concerne l'espace libre (84) de telle façon que la prise de test (P) ou similaire peut également être enfichée lorsqu'il y a un conducteur (A) pincé.

3. Module de raccordement selon la revendication 1 ou 2, **caractérisé en ce que** la prise de test (P) ou similaire peut être introduite dans l'espace libre (84) même lorsqu'un parafoudre à gaz est en place.

4. Module de raccordement selon l'une au moins des revendications précédentes, **caractérisé en ce que**, pour le point de coupure, l'ouverture (38) est obturée au moyen d'un capuchon qui ne peut pas être ouvert sans être détruit.

5. Module de raccordement selon l'une au moins des revendications précédentes, **caractérisé en ce que** des contacts de raccordement (14, 14') sont disposés dans le boîtier (10, 10') afin de connecter au total deux conducteurs doubles.

6. Module de raccordement selon l'une au moins des revendications précédentes, **caractérisé en ce que**, sur un contact de raccordement (14, 14') entre deux contacts à borne guillotine (16, 16') pour un conducteur (A), il est prévu deux languettes de contact (18, 18') sur chacune desquelles un ressort de contact (50, 52, 54, 56) peut être enfiché afin de connecter un parafoudre à gaz.

7. Module de raccordement selon l'une au moins des revendications précédentes, **caractérisé en ce qu'**il est prévu sur le dessous du boîtier un réceptacle à encliquetage pour un ressort de contact de mise à la terre (66).

8. Module de raccordement selon l'une au moins des revendications précédentes, **caractérisé en ce que** le contact de raccordement (14, 14') présente pour chaque conducteur simple (A) deux contacts à borne guillotine (16, 16') qui sont disposés sur une ligne droite parallèle aux deux parois extérieures (22, 24).

9. Module de raccordement selon l'une au moins des revendications précédentes, **caractérisé en ce que** la distance entre deux contacts à borne guillotine d'un conducteur double et la distance entre deux contacts à borne guillotine voisins de deux conducteurs doubles d'un module sont de tailles différentes.

10. Module de raccordement selon l'une au moins des revendications précédentes, **caractérisé en ce que** le boîtier (10, 10') présente sur le dessous une possibilité d'encliquetage (13, 13') permettant la fixation sur une embase au moyen de tétons d'encliquetage.

11. Module de raccordement selon l'une au moins des revendications précédentes, **caractérisé en ce que** le boîtier présente sur le dessous une possibilité d'encliquetage pour la fixation sur un rail profilé (12) et **en ce que** le boîtier (10, 10') présente sur deux parois extérieures opposées (22, 24) un dispositif de liaison (26, 28) permettant le couplage d'un autre module de raccordement même sans l'aide d'un rail profilé (12).

12. Module de raccordement selon la revendication 11, **caractérisé en ce que** le dispositif de liaison présente une rainure (26) qui va en s'amincissant et un élément de couplage (28) qui s'engage dans celle-ci.

13. Module de raccordement selon la revendication 12, **caractérisé en ce que** l'élément de couplage est une saillie complémentaire formée d'un seul tenant avec le module de raccordement ou, de préférence, une nervure de liaison (28) séparée et profilée qui peut être introduite dans les rainures (26) de deux modules voisins de manière à les coupler.

14. Module de raccordement selon l'une au moins des revendications précédentes, **caractérisé en ce qu'**il est prévu dans le boîtier (10, 10') une possibilité de connexion pour un blindage et une mise à la terre d'un câble de télécommunications.

15. Module de raccordement selon l'une au moins des revendications précédentes, **caractérisé en ce qu'**il est prévu dans le boîtier (10, 10') des ouvertures (30', 38, 32, 34, 30) espacées de façon à permettre d'introduire par le haut en même temps dans le module de raccordement, pour un conducteur, une fiche de coupure (TR), de test ou de protection fine (F) dans un point de coupure, un parafoudre à gaz (40, 42, 42') dans l'évidement et une prise de test (P) dans le contact à borne guillotine opposé (16), un contact à borne guillotine (16') pouvant être câblé en même temps.

16. Module de raccordement selon l'une au moins des revendications précédentes, **caractérisé en ce qu'**il est prévu dans le boîtier (10, 10'), pour chaque conducteur (A), un contact de raccordement d'un seul tenant (14) qui a réalisé dans l'ordre les connexions suivantes : un contact à borne guillotine (16'), un point de contact avec deux étriers (20, 20'), deux contacts (18', 18) pour des parafoudres à gaz (40, 42, 42') et un autre contact à borne guillotine (16).

17. Module de raccordement selon la revendication 16, **caractérisé en ce que** le contact de raccordement (14) présente dans la zone de la branche de contact (20, 20') une patte de connexion détachable (19) permettant de transformer un point de contact en un point de coupure.

18. Dispositif avec au moins deux modules de raccordement selon l'une au moins des revendications précédentes juxtaposés, **caractérisé en ce qu'**il présente un étrier de liaison sensiblement en forme de U qui peut être enfiché par le haut sur les éléments de contact (60) de deux modules de raccordement voisins.

19. Dispositif avec au moins deux modules de raccordement selon l'une au moins des revendications précédentes juxtaposés, **caractérisé en ce que** ceux-ci sont en contact l'un avec l'autre sans espace par l'intermédiaire de leurs parois extérieures (22, 24) respectives.
